# EUROPÄISCHE PATENTSCHRIFT

(11) **EP 0 895 273 B1**
(45) Veröffentlichungstag und Bekanntmachung des Hinweises auf die Patenterteilung: **19.05.2004**
(21) Anmeldenummer: 98202503.3
(22) Anmeldetag: 27.07.1998
(51) Int. Cl.: H01J 35/10

(54) **Drehanoden-Röntgenröhre mit einem Gleitlager**
Rotating anode type X-ray tube with a slide bearing
Tube à rayons X à anode tournante avec palier à glissement

(30) Priorität: 01.08.1997 DE 19733274
(43) Veröffentlichungstag der Anmeldung: 03.02.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Vetter, Axel, Röntgenstrasse 24, 22335 Hamburg (DE); Tielemans, Leonardus Petrus Maria, Röntgenstrasse 24, 22335 Hamburg (DE); Wassink, Bernardus Wilhelmus Johannes, Röntgenstrasse 24, 22335 Hamburg (DE)
(74) Vertreter: Volmer, Georg, Dipl.-Ing.

(56) Entgegenhaltungen:
- EP-A- 0 378 273
- US-A- 5 381 285

## Beschreibung

Die Erfindung betrifft eine Drehanoden-Röntgenröhre mit einem der Lagerung der Drehanode dienenden Gleitlager, das einen inneren Lagerkörper und einen diesen umschließenden äußeren Lagerkörper umfaßt, wobei die beiden Lagerkörper zur Aufnahme von radialen Lagerkräften wenigstens eine zylinderförmige Lagerfläche und zur Aufnahme von axialen Lagerkräften wenigstens eine dazu senkrechte Lagerfläche aufweisen.

Eine solche Röntgenröhre ist aus der US PS 5.068.885 bekannt. Dabei müssen die Lagerflächen für die axialen Lagerkräfte möglichst exakt rechtwinklig zu den zylinderförmigen Lagerflächen für die radialen Lagerkräfte verlaufen. Diese Forderung ist auch mit hohem Fertigungsaufwand nur näherungsweise zu erfüllen. Man muß daher bei der Dimensionierung der Lagerflächen insbesondere für das axiale Lager berücksichtigen, daß die Lagerflächen in den beiden Lagerkörpern nicht exakt parallel zueinander verlaufen und sich demgemäß eine geringere Tragfähigkeit ergibt. Deshalb müssen die Lagerflächen größer sein als an sich erforderlich, wodurch das Bauvolumen der Lagerkörper vergrößert wird.

Es ist Aufgabe der vorliegenden Erfindung, eine Drehanoden-Röntgenröhre der eingangs genannten Art in der Weise zu verbessern, daß der Herstellungsaufwand und das Bauvolumen der Lagerkörper verringert werden.

Diese Aufgabe wird erfindungsgemäß dadurch gelöst, daß der innere Lagerkörper drei Lagerteile umfaßt, wobei der erste Lagerteil die axialen Lagerkräfte und der zweite Lagerteil die radialen Lagerkräfte aufnimmt, und wobei der dritte Lagerteil den ersten und den zweiten Lagerteil so miteinander verbindet, daß bei einer Rotation des Gleitlagers die Symmetrieachse des ersten bzw des zweiten Lagerteils eine Taumelbewegung um die Rotationachse ausführen kann.

Die Erfindung basiert auf der Überlegung, daß die zylinderförmigen Lagerflächen in den beiden Lagerkörpern sich mit kaum meßbaren Abweichungen von der exakten Zylinderform und den vorgegebenen Durchmessern herstellen lassen. Ebenso lassen sich die axialen Lagerflächen so herstellen, daß kaum Abweichungen von der Planparallelität, den Dicken und der Ebenheit festzustellen sind. Hingegen ist die Forderung nach einem rechten Winkel zwischen den beiden Lagerflächen nicht mit der gleichen Exaktheit zu erfüllen.

Wenn demgemäß die Lagerflächen für die axialen und die radialen Lagerkräfte bei dem äußeren Lagerkörper nicht exakt senkrecht zueinander verlaufen, führt der erste oder der zweite Lagerteil des inneren Lagerkörpers bei der Rotation des erfindungsgemäßen Gleitlagers eine Taumelbewegung um die Rotationsachse aus, bei der sich die Symmetrieachse einmal pro Umdrehung des Gleitlagers um die Rotationsachse herum auf einem Kegelmantel bewegt. Dabei sind in jeder Phase der Umdrehung die Lagerflächen bzw. die Symmetrieachsen der beiden Lagerkörper parallel zueinander. Infolgedessen ist eine optimale Tragfähigkeit gewährleistet, auch wenn im äußeren Lagerkörper die Lagerflächen für die axialen Lagerkräfte nicht exakt rechtwinklig zu den Lagerflächen für die radialen Lagerkräfte hergestellt wurden. Deshalb können - bei gleicher Tragfähigkeit - die Abmessungen des Gleitlagers verringert werden.

Es sei an dieser Stelle erwähnt, daß aus der US-PS 5.381.285 bereits eine Lageranordnung für eine Festplatte bekannt ist, bei der die radialen und die axialen Lager sich - mit relativ großem Kraftaufwand - einstellen können, wobei der innere Lagerkörper einstückig ausgebildet ist und zwischen den beiden Lagern einen Bereich mit verringertem Durchmesser aufweist. Eine solche Konstruktion ist bei einer Röntgenröhre, bei der die Lager aus Metall (z.B. Molybdän) bestehen und relativ hohe Torsionskräfte aufnehmen müssen und bei der das Lager sowohl mit vertikaler als auch mit horizontaler Rotationsachse betrieben werden muß, nicht anwendbar.

Anspruch 2 beschreibt eine bevorzugte Ausführungsform der Erfindung, bei der der innere Lagerkörper aus wenigstens drei Teilen zusammengesetzt ist. Mit der Ausgestaltung nach Anspruch 3 ergibt sich dabei eine besonders einfache Ausführungsform, bei der durch den balligen Bereich die Scheibe nicht nur um die Achse des Stiftes, sondern auch z.B. um eine dazu senkrechte Achse geschwenkt werden kann. Eine besonders einfache Sicherung des Stiftes innerhalb der Bohrung im zweiten Lagerteil ist in Anspruch 4 angegeben.

Anspruch 5 beschreibt eine weitere Ausführungsform, bei der der erste und der dritte Lagerteil nach Art eines Gelenklagers zusammenwirken.

Die Ansprüche 6 und 7 beschreiben verschiedene Möglichkeiten, wie der erste und der zweite Lagerteil relativ zueinander angeordnet werden können. Anspruch 9 gibt eine vorteilhafte Ausgestaltung von Anspruch 6 an.

Grundsätzlich kann der innere Lagerkörper oder der äußere Lagerkörper mit dem Röhrenkolben (und der jeweils andere Lagerkörper mit der Drehanodenscheibe) verbunden sein. Vorzugsweise ist der innere Lagerkörper mit dem Röhrenkolben verbunden. Eine dafür geeignete bevorzugte Ausführungsform ist in Anspruch 8 beschrieben. Diese erzwingt, daß bei einer Rotation der erste Lagerteil die Taumelbewegung ausführt. Der erste Lagerteil hat in der Regel aufgrund seiner scheiben- oder ringförmigen Ausbildung ein geringeres Trägheitsmoment als der zylinderförmige zweite Lagerteil und kann daher ohne Phasenverschiebung den Drehungen der korrespondierenden Lagerflächen in dem äußeren Lagerkörper folgen.

Die Erfindung wird nachstehend anhand der Zeichnungen näher erläutert. Es zeigen:
Fig. 1 eine bevorzugte Ausführungsform einer erfindungsgemäßen Röntgenröhre,
Fig. 2 eine Einzelheit des Gleitlagers dieser Röntgenröhre,
Fig. 3 die Lage von Rotations- und Symmetrieachse, die sich bei mangelnder Rechtwinkligkeit des Lagers ergibt,
Fig. 4 eine Variante der Ausführungsform nach Fig. 1 und
Fig. 5 eine weitere Ausführungsform der Erfindung.

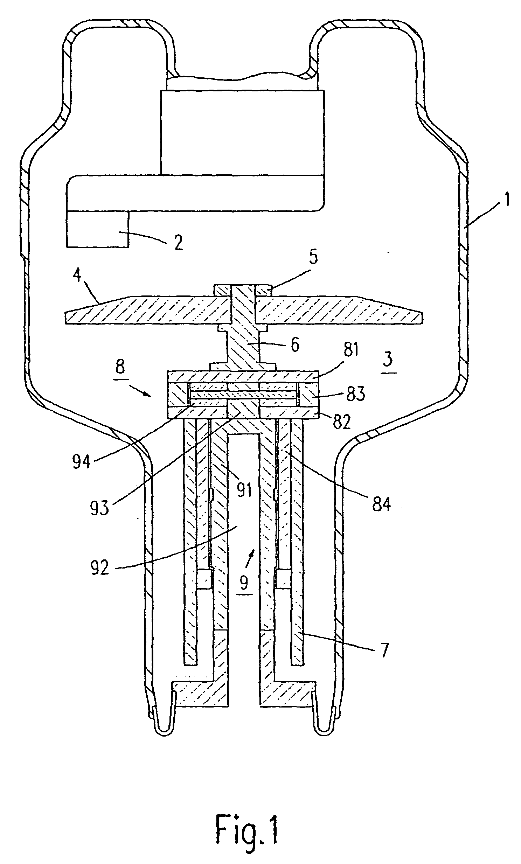

Fig. 1 zeigt eine Drehanoden-Röntgenröhre mit einem Glaskolben 1. An dem Glaskolben 1 ist eine Kathodenanordnung 2 und eine Anodenanordnung 3 befestigt. Die Anodenanordnung umfaßt einen im Betriebszustand rotierenden Anodenteller 4, der mit einer Mutter 5 an einem Anodenstiel 6 befestigt ist, der durch einen Rotor 7 angetrieben wird und in einem Gleitlager gelagert ist. Das Gleitlager besteht aus einem äußeren, mit dem Anodenteller 4 bzw. dem Stiel 6 oder dem Rotor 7 mitrotierenden Lagerkörper 8 und aus einem inneren, am Röhrenkolben 1 befestigten Lagerkörper 9.

Der äußere Lagerkörper umfaßt eine kreisförmige, mit dem Stiel 6 verbundene Scheibe 81, die über einen Distanzring 83 mit einer ringförmigen Scheibe 82 verbunden ist. Die Innenflächen der Scheiben 81 und 82 bilden - zusammen mit korrespondierenden Lagerflächen in dem inneren Lagerkörper 9 ein axiales Gleitlager. An der Scheibe 82 ist ein hohlzylindrischer Teil 84 befestigt, der von dem Rotor 7 umschlossen wird. Die Teile 81 ..... 84 des äußeren Lagerkörpers 8 sind starr miteinander verbunden.

Der innere Lagerkörper 9 umfaßt eine Achse 91 mit zylinderförmiger Außenfläche, die von dem Teil 84 des äußeren Lagerkörpers umschlossen wird und auf ihrer Außenseite in an sich bekannter Weise mit einem - in Fig. 1 nicht nähergestellten - Muster von helixförmigen Rillen versehen ist, wobei ein flüssiges Schmiermittel (z.B. eine Galliumlegierung) in dem Spalt zwischen den Teilen 91 und 84 vorgesehen ist, so daß diese Teile ein hydrodynamisches Gleitlager bilden, das radiale Lagerkräfte aufnehmen kann. Der Lagerteil 91 kann mit einer konzentrischen Bohrung 92 versehen sein, die mit einem geeigneten Kühlmittel gekühlt werden kann.

An dem oberen Ende der Achse 91 ist ein Schaft 93 befestigt, der von einer ringförmigen Scheibe 94 umschlossen wird, deren Außenflächen zusammen mit den Innenflächen der Scheiben 81 und 84 ein Spiralrillenlager für axiale Lagerkräfte bilden, wobei jeweils eine Innen- oder Außenfläche mit einem nicht näher dargestellten Spiralrillenmuster versehen ist.

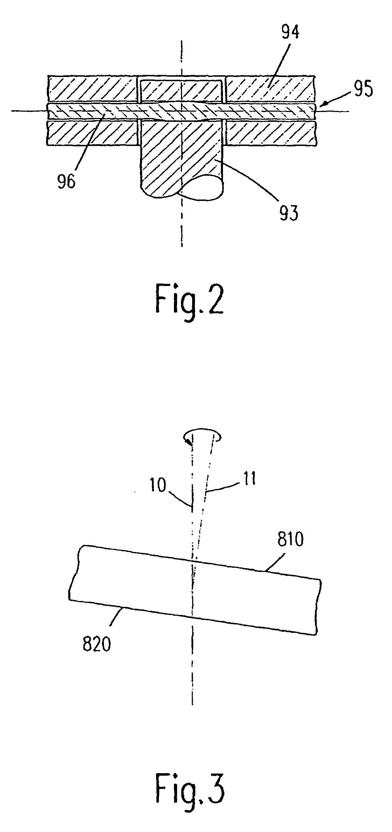

Wie in Fig. 2 dargestellt, weist die Scheibe 94 eine zur Scheibenfläche parallele Bohrung 95 auf, in der sich ein Stift 96 befindet, der durch eine weitere Bohrung im Schaft 93 geführt ist. Der Stift 96 ist in seinem zentralen Bereich, der sich mit geringem Spiel in der Bohrung im Schaft 93 befindet, ballig geschliffen (d.h. der Längsschnitt durch diesen Stift hat dort einen endlichen Krümmungsradius). Es ist deshalb möglich, die fest mit dem Stift verbundene Scheibe 94 in jeder beliebigen Richtung um einen kleinen Winkel aus einer rechtwinkligen Stellung zu dem Anodenschaft 93 zu kippen. Der Stift rollt dabei an seinem Kontaktpunkt in der Bohrung im Schaft 93 ab, und die Scheibe richtet sich mit vernachlässigbarem Kraftaufwand aus. Der dadurch bedingte Verschleiß ist minimal.

Fig. 3 erläutert die Verhältnisse, die sich bei einem derartigen Lager ergeben können, wenn die Innenflächen der Scheiben 81 und 82 nicht exakt senkrecht zu dem Lagerteil 84 verlaufen. Die Symmeterieachse des Lagerteils 84 bildet die Rotationsachse 10 des Gleitlagers. Die Innenflächen der Scheiben 81 und 82 sind mit 810 bzw. 820 bezeichnet und schneiden die Rotationsachse unter einem von 90° verschiedenen Winkel. Der Teller 94 paßt sich dieser Schrägstellung an, wobei seine Symmetrieachse 11 mit der Rotationsachse 10 einen von 0° verschiedenen Winkel bildet (der Deutlichkeit halber ist dieser Winkel in Fig. 3 übertrieben groß dargestellt; in Wirklichkeit beträgt er nur Bruchteile von 1°). Bei einer Rotation ändern die Flächen 810 und 820 fortwährend ihre Lage im Raum, wobei die Scheibe 94 dieser Bewegung folgt, wobei ihre Symmetrieachse 11 mit der Rotationsfrequenz um die Rotationsachse 10 präzediert.

Besonders vorteilhaft ist es, wenn - anders als in der Zeichnung dargestellt - das Axialllager und das Radiallager etwa den gleichen Außendurchmesser haben. Die axialen und radialen Lagerflächen treten dann nicht aufgrund unterschiedlicher Fliehkräfte in eine Schmiermittelkonkurrenz, bei der sic sich gegenseitig das Schmiermittel entziehen können. Dies ist insbesondere für höhere drehzahlen wichtig.

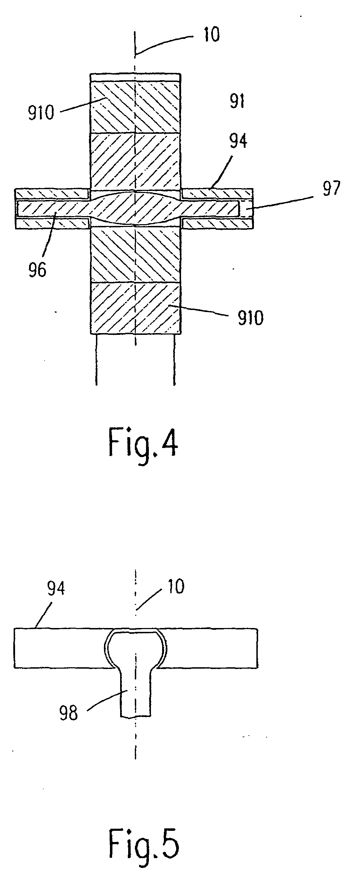

Bei der in Fig. 1 dargestellten Ausführungsform sind das axiale und das radiale Spiralrillenlager in axialer Richtung gegeneinander versetzt. Fig. 4 zeigt eine Ausführungsform, bei der dies nicht der Fall ist und bei der die Scheibe 94 den Schaft 91 in der Mitte zwischen zwei radialen Spiralrillen-Mustern 910 umschließt. Der Stift 96, der über einen mit Gewinde 97 versehenen Bereich in der Scheibe 94 gesichert ist (das gleiche ist bei der Ausführungsform nach den Fig. 1 bzw. 3 möglich), hat in seiner Mitte wiederum einen balligen Bereich, der sich mit geringem Spiel in einer zur Rotationsachse 10 senkrechten Bohrung in dem Schaft 91 befindet, so daß der Teller 94 leicht gegenüber der Achse 91 gekippt werden kann. - Allerdings hat diese Ausführungsform den Nachteil, daß die Achse 91 massiv sein muß und nicht über eine Innenbohrung kühlbar ist, wie bei der Ausführungsform nach Fig. 1.

Fig. 5 zeigt ausschnittsweise eine weitere Ausführungsform des inneren Lagerkörpers, bei der das Kippen des Ringes 94 gegenüber einem (an der nicht näher dargestellten Achse 91 befestigten) Schaft 98 dadurch erreicht wird, daß die dem Schaft 98 zugewandten Innenflächen der Scheibe 94 und die der Scheibe 94 zugewandten Außenflächen des Schaftes 98 wie die Teile einer Kugeloberfläche geformt sind. Die Teile 93 und 94 bilden dabei ein Gelenklager, das eine leichte Schrägstellung der Scheibe 94 gegenüber dem Schaft 98 erlaubt.

## Patentansprüche

1. Drehanoden-Röntgenröhre mit einem der Lagerung der Drehanode (4) dienenden Gleitlager, das einen inneren Lagerkörper (9) und einen diesen umschließenden äußeren Lagerkörper (8) umfaßt, wobei die beiden Lagerkörper zur Aufnahme von radialen Lagerkräften wenigstens eine zylinderförmige Lagerfläche und zur Aufnahme von axialen Lagerkräften wenigstens eine dazu senkrechte Lagerfläche aufweisen,
**dadurch gekennzeichnet, daß** der innere Lagerkörper (9) drei Lagerteile umfaßt, wobei der erste Lagerteil (94) die axialen Lagerkräfte und der zweite Lagerteil (91) die radialen Lagerkräfte aufnimmt, und wobei der dritte Lagerteil (93,96) den ersten und den zweiten Lagerteil so miteinander verbindet, daß bei einer Rotation des Gleitlagers die Symmetrieachse (11) des ersten bzw des zweiten Lagerteils eine Taumelbewegung um die Rotationachse (10) ausführen kann.

2. Drehanoden-Röntgenröhre nach Anspruch 1
**dadurch gekennzeichnet, daß** der dritte Lagerteil durch ein Koppelglied (96) gebildet wird, das durch eine Öffnung (95) zwischen den Lagerflächen des als kreis- bzw ringförmige Scheibe (94) ausgebildeten ersten Lagerteils geführt ist und das an dem zweiten Lagerteil (91) bzw. einem damit fest verbundenen Teil (93) schwenkbar gelagert ist.

3. Drehanoden-Röntgenröhre nach Anspruch 2
**dadurch gekennzeichnet, daß** das Koppelglied ein Stift (96) ist, der durch die aus einer zur Oberfläche der Scheibe parallelen Bohrung (95) bestehende Öffnung geführt ist, und daß der Stift in seinem zentralen Teil einen balligen Bereich aufweist, der in einer Bohrung in dem zweiten Lagerteil (91) bzw. einem damit fest verbundenen Teil (93) gelagert ist.

4. Drehanoden-Röntgenröhre nach Anspruch 3
**dadurch gekennzeichnet, daß** der Stift (96) in der Bohrung (95) in der Scheibe (94) gesichert ist, vorzugsweise durch eine Schraubverbindung (97) .

5. Drehanoden-Röntgenröhre nach Anspruch 1
**dadurch gekennzeichnet, daß** der erste Lagerteil (94) die Form eines Ringes hat und eine kugelförmige Innenfläche aufweist, daß der dritte Lagerteil (98) eine daran angepaßte kugelförmige Außenfläche aufweist, und daß der erste Lagerteil (94) den dritten Lagerteil (98) umschließt, der starr mit dem zweiten Lagerteil (91) verbunden ist.

6. Drehanoden-Röntgenröhre nach Anspruch 1,
**dadurch gekennzeichnet, daß** die erste (94) und der zweite Lagerteil (91) in axialer Richtung gegeneinander versetzt angeordnet sind.

7. Drehanoden-Röntgenröhre nach Anspruch 1,
**dadurch gekennzeichnet, daß** der erste Lagerteil (94) den zweiten Lagerteil (91) ringförmig umschließt.

8. Drehanoden-Röntgenröhre nach Anspruch 1
**dadurch gekennzeichnet, daß** der zweite Lagerteil (91) fest mit dem Kolben (1) der Röntgenröhre verbunden ist.

9. Drehanoden-Röntgenröhre nach Anspruch 6
**dadurch gekennzeichnet, daß** der erste und er zweite Lagerteil annähernd den gleiche Durchmesser aufweisen.

## Claims

1. A rotary-anode X-ray tube which includes a slide bearing which serves to journal the rotary anode (4) and comprises an inner bearing member (9) and an outer bearing member (8) which encloses the former bearing member, the two bearing members having at least one cylindrical bearing surface for taking up radial bearing forces and at least one bearing surface which extends perpendicularly thereto so as to take up axial bearing forces,
**characterized in that** the inner bearing member (9) comprises three bearing portions, the first bearing portion (94) taking up the axial bearing forces whereas the second bearing portion (91) takes up the radial bearing forces and the third bearing portion (93, 96) interconnects the first and the second bearing portion in such a manner that the symmetry axis (11) of the first or the second bearing portion can perform a swaying motion about the axis of rotation (10) during rotation of the slide bearing.

2. A rotary-anode X-ray tube as claimed in Claim 1,
**characterized in that** the third bearing portion is formed by a coupling member (96) which is guided through an opening (95) between the bearing surfaces of the first bearing portion which is constructed as a circular or annular disc (94) and is pivotably journaled on the second bearing portion (91) or on a part (93) rigidly connected thereto.

3. A rotary-anode X-ray tube as claimed in Claim 2,
**characterized in that** the coupling member is a pin (96) which is guided through the opening which consists of a bore (95) extending parallel to the surface of the disc, and that the central part of the pin is provided with a spherical zone which is journaled in a bore in the second bearing portion (91) or a part (93) rigidly connected thereto.

4. A rotary-anode X-ray tube as claimed in Claim 3,
**characterized in that** the pin (96) is secured in the bore (95) in the disc (94), preferably by means of a screwed connection (97).

5. A rotary-anode X-ray tube as claimed in Claim 1,
**characterized in that** the first bearing portion (94) is shaped as a ring and has a spherical inner surface, that the third bearing portion (98) has a matching spherical outer surface, and that the first bearing portion (94) encloses the third bearing portion (98) which is rigidly connected to the second bearing portion (91).

6. A rotary-anode X-ray tube as claimed in Claim 1,
**characterized in that** the first bearing portion (94) and the second bearing portion (91) are arranged so as to be offset relative to one another in the axial direction.

7. A rotary-anode X-ray tube as claimed in Claim 1,
**characterized in that** the first bearing portion (94) encloses the second bearing portion (91) in a ring-like manner.

8. A rotary-anode X-ray tube as claimed in Claim 1,
**characterized in that** the second bearing portion (91) is rigidly connected to the envelope (1) of the X-ray tube.

9. A rotary-anode X-ray tube as claimed in Claim 6,
**characterized in that** the first and the second bearing portion have approximately the same diameter.

## Revendications

1. Tube à rayons X à anode tournante avec un palier à glissement servant au logement de l'anode tournante (4) qui comprend un corps de palier (9) interne et un corps de palier (8) externe refermant ce dernier, les deux corps de logement présentant au moins une surface de palier cylindrique pour recueillir les forces de palier radiales et au moins une surface de palier perpendiculaire à celle-ci pour recueillir les forces de palier axiales,
**caractérisé en ce**
**que** le corps de palier (9) interne comprend trois pièces de palier, la première pièce de palier (94) recueillant les forces de palier axiales et la deuxième pièce de palier (91) les formes de palier radiales et la troisième pièce de palier (93, 96) reliant les première et deuxième pièces de palier entre elles de telle sorte qu'en cas de rotation du palier à glissement, l'axe de symétrie (11) des première ou deuxième pièces de palier peut exécuter un mouvement de culbute autour de l'axe de rotation (10).

2. Tube à rayons X à anode tournante selon la revendication 1,
**caractérisé en ce**
**que** la troisième pièce de palier est formée par un organe d'accouplement (96) qui est guidé par une ouverture (95) entre les surfaces de palier de la première pièce de palier conçue comme un disque circulaire ou annulaire (94) et qui est logé à pivotement sur la deuxième pièce de palier (91) ou une pièce (93) fixée à demeure à celle-ci.

3. Tube à rayons X à anode tournante selon la revendication 2
**caractérisé en ce**
**que** l'organe d'accouplement est une broche (96) qui est guidée par l'ouverture composée d'une alésage (95) parallèle à la surface du disque et que la broche présente dans sa partie centrale une zone bombée qui est logée dans un alésage dans la deuxième pièce de palier (91) ou une pièce (93) fixée à demeure à celle-ci.

4. Tube à rayons X à anode tournante selon la revendication 3
**caractérisé en ce que** la broche (96) est bloquée dans l'alésage (95) dans le disque (94), de préférence par un raccord vissé (97).

5. Tube à rayons X à anode tournante selon la revendication 1
**caractérisé en ce que** la première pièce de palier (94- a la forme d'un anneau et présente une surface interne en forme de bille, que la troisième pièce de palier (98) présente une surface extérieure en forme de bille adaptée à celle-ci, et que la première pièce de palier (94) renferme la troisième pièce de palier (98) qui est fixée rigidement à la première pièce de palier (91).

6. Tube à rayons X à anode tournante selon la revendication 1,
**caractérisé en ce que** les première (94) et deuxième (91) pièces de palier sont décalées l'une par rapport à l'autre en direction axiale.

7. Tube à rayons X à anode tournante selon la revendication 1,
**caractérisé en ce que** la première pièce de palier (94) renferme annulairement la deuxième pièce de palier (91).

8. Tube à rayons X à anode tournante selon la revendication 1
**caractérisé en ce que** la deuxième pièce de palier (91) est fixée rigidement au tube en verre (1) du tube à rayons X.

9. Tube à rayons X à anode tournante selon la revendication 6
**caractérisé en ce que** les première et deuxième pièces de palier présentent approximativement le même diamètre.
